Europäisches Patentamt

European Patent Office

Office européen des brevets

(19)

(11) Veröffentlichungsnummer : **0 524 925 B1**

# (12) EUROPÄISCHE PATENTSCHRIFT

(45) Veröffentlichungstag der Patentschrift :
**06.07.94 Patentblatt 94/27**

(51) Int. Cl.⁵ : **H01B 3/00, H01B 3/12, C04B 35/64**

(21) Anmeldenummer : **90915451.0**

(22) Anmeldetag : **30.10.90**

(86) Internationale Anmeldenummer :
**PCT/EP90/01935**

(87) Internationale Veröffentlichungsnummer :
**WO 91/08576 13.06.91 Gazette 91/13**

(54) ZUSAMMENSETZUNG ZUR HERSTELLUNG EINES DIELEKTRISCHE ODER PYROELEKTRISCHE EIGENSCHAFTEN AUFWEISENDEN MATERIALS UND VERFAHREN ZUR HERSTELLUNG DES MATERIALS.

(30) Priorität : **24.11.89 DE 3938890**

(43) Veröffentlichungstag der Anmeldung :
**03.02.93 Patentblatt 93/05**

(45) Bekanntmachung des Hinweises auf die Patenterteilung :
**06.07.94 Patentblatt 94/27**

(84) Benannte Vertragsstaaten :
**BE DE FR GB IT NL**

(56) Entgegenhaltungen :
**EP-A- 385 509**
**FR-A- 2 445 383**

(73) Patentinhaber : **CERASIV GmbH INNOVATIVES KERAMIK-ENGINEERING**
**Fabrikstrasse 23-29**
**D-73207 Plochingen (DE)**

(72) Erfinder : **FRIEDERICH, Kilian**
**Talweg 34**
**D-7310 Plochingen (DE)**
Erfinder : **JASCHINSKI, Wolfgang**
**Schönbuchstrasse 9**
**D-7311 Neidlingen (DE)**
Erfinder : **NIMTZ, Günter**
**Starenweg 34**
**D-5020 Königsdorf (DE)**
Erfinder : **MARQUARDT, Peter**
**Melatengürtel 32**
**D-5000 Köln 41 (DE)**

(74) Vertreter : **Schulz, Wilfried et al**
**Dynamit Nobel AG**
**Abt.Patente und Dokumentation**
**D-53839 Troisdorf (DE)**

EP 0 524 925 B1

**Beschreibung**

Zusammensetzung zur Herstellung eines dielektrische oder pyroelektrische Eigenschaften aufweisenden Materials und Verfahren zur Herstellung des Materials

Die Erfindung betrifft eine Zusammensetzung, wie sie im Gattungsbegriff des Patentanspruchs 1 angegeben ist, sowie ein Verfahren zur Herstellung eines dielektrische oder pyroelektrische Eigenschaften aufweisenden Materials unter Verwendung dieser Zusammensetzung.

Die Erfindung geht von dem in der DE-OS 38 02 150 beschriebenen Verfahren aus, wonach dort als mesoskopisch bezeichnete Partikel im Bereich von 1 bis 1000 nm, die im makroskopischen Kompaktzustand elektrisch leitend sind, in einen nicht leitenden Feststoff oder in eine nicht leitende Flüssigkeit eingebracht werden. Wie in dieser Schrift angegeben, ist es zwingend erforderlich, daß die einzubringenden Partikel gegeneinander isoliert sind. Obwohl die DE-OS 38 02 150 als geeignete nicht leitende Feststoffe für die Matrix neben Kunststoff auch Keramik nennt, ist lediglich eine Methode zur Einbringung von Indiumpartikeln in Öl offenbart, nicht aber die Herstellung einer Keramikmatrix mit darin eingelagerten Metallpartikeln, obwohl unter anwendungstechnischen Gesichtspunkten einer solchen Materialkombination eine wesentlich höhere Bedeutung zukommt.

In der FR 24 45 383 werden Keramiken beschrieden, die Metallpartikel in feinverteilter Form enthalten. Als Metalledukte werden Metallhydride oder - salze verwendet, welche mit dem Keramikpulver (ggf. in einem Lösungsmittel) vermischt und anschließend chemisch reduziert werden.

Eigene Untersuchungen der Anmelderin haben nun ergeben, daß die Einlagerung feinteiliger Partikel, insbesondere von Partikeln mit einem Durchmesser < 1 μm, in eine Keramikmatrix unter Beachtung der bestehenden Forderung nach Isolierung der Partikel auf erhebliche Schwierigkeiten stößt. Keramische Ausgangspulver im Submikronbereich sind an sich zwar bekannt, jedoch ist zu beachten, daß zu ihrer Kennzeichnung zumeist der $D_{50}$-Wert oder die durchschnittliche Teilchengröße herangezogen wird, d.h. Pulver mit einem $D_{50}$-Wert von < 1 μm enthalten durchaus noch Teilchen in einer Größe von mehr als 1 μm. Der Einsatz wesentlich feinerer Ausgangspulver, d.h. einer Feinheit bis zu 0,001 μm entsprechend 1 nm, wie er durch die DE-OS 38 02 150 für Indiumpartikel in Erwägung gezogen wird, war in der Keramikindustrie bisher nicht gebräuchlich, insbesondere nicht im Zusammenhang mit der bestehenden Forderung nach Isolierung dieser feinen Teilchen voneinander. Da die DE-OS 38 02 150 jedoch lehrt, daß die elektrische Leitfähigkeit von Indiumpartikeln in Öl mit abnehmendem Durchmesser ungefähr proportional zu dessen dritter Potenz abnimmt, gehen fachmäßige Überlegungen dahin, auch bei der Einbringung feinteiliger Partikel in Keramikmatrices möglichst feine Teilchengrößen, d.h. im Bereich bis zu 0,1 μm, vorzugsweise sogar bis nur 0,01 μm, auszuwählen. Da bei diesen äußerst feinen Partikeln infolge der Einwirkung van der Waalsscher Kräfte ein starker Zusammenhalt besteht, bereiten sie bei ihrer Verarbeitung insofern besondere Schwierigkeiten, als sich ein homogener Verteilungsgrad dieser Partikel in einer Keramikmatrix nicht ohne weiteres einstellen läßt. Eine weitere Problematik bei der Verwendung von Partikeln aus Edelmetall besteht darin, daß zwischen der Materialdichte der keramischen Matrixpulver und derjenigen von Edelmetallen, wie zum Beispiel Platin oder Gold, erhebliche Unterschiede bestehen, so daß flüssige Dispersionen von Keramik-/Edelmetallpulvergemischen dazu neigen, sich infolge des unterschiedlichen Sedimentationsverhaltens ihrer Komponenten zu entmischen. Eine gleichmäßige Verteilung der Edelmetallpartikel in einer Keramikmatrix ist unter Anwendung der üblichen Verfahrensmaßnahmen damit nicht möglich. Schließlich ist es bei der Einlagerung oxidationsempfindlicher Partikel unbedingt erforderlich, einen Oxidationsprozeß zu vermeiden und die Partikel in einem nichtoxidierten und/oder nichtkorrodierten Zustand in die Keramikmatrix einzubringen.

Die Erfindung hat die Aufgabe, die vorstehenden Probleme zu lösen und eine Zusammensetzung für die Herstellung von dielektrische oder pyroelektrische Eigenschaften aufweisenden Materialien anzugeben, die eine Herstellung auf einfache Weise in hoher und gleichmäßiger Qualität auch unter der Voraussetzung ermöglicht, daß ein hoher Füllfaktor an einzulagernden Partikeln für die Keramikmatrix vorliegt. Eine weitere Aufgabe der Erfindung besteht darin, ein Herstellungsverfahren für die genannten Materialien vorzuschlagen.

Zur Lösung der vorstehenden Aufgabe sieht die Erfindung bei einer Zusammensetzung gemäß dem Gattungsbegriff von Patentanspruch 1 dessen kennzeichnende Merkmale vor. Vorzugsweise Ausführungsformen der Zusammensetzung sind in den Patentansprüchen 2 bis 6 angegeben. In Patentanspruch 7 ist ein Hesstellungsverfahren unter Verwendung der erfindungsgemäßen Zusammensetzung gekennzeichnet. Vorzugsweise Ausführungsformen des erfindungsgemäßen Verfahrens sind durch die Unteransprüche 8 bis 10 gekennzeichnet.

Die Auswahl eines Dispersionsmediums mit einer $35 \times 10^{-6}$ N/mm nicht überschreitenden Oberflächenspannung, das gleichzeitig eine Dielektrizitätskonstante > 6 aufweist, ermöglicht eine optimale Homogenisierung der Zusammensetzung. Damit ist die Grundvoraussetzung für die Herstellung des gewünschten Materials unter Verwendung von feinteiligen Partikeln < 1 μm auch unter der Voraussetzung gegeben, daß pulvermaterialien mit erheblich unterschiedlichen spezifischen Gewichten zum Einsatz kommen.

Vorzugsweise Ausführungsformen der Erfindung bestehen darin, daß die in die keramische Matrix einzulagernden feinen Partikel als Ausgangspulver über eine Größe von nicht mehr als 0,1 $\mu$m, vorzugsweise sogar feiner als 0,01 $\mu$m verfügen.

Entsprechend einer vorzugsweisen Ausführungsform besteht das Dispersionsmedium aus einem schwachpolaren oder polaren Lösungsmittel oder enthält eine solche Verbindung, wobei der Ausdruck "Lösungsmittel" im Rahmen der vorliegenden Erfindung nicht bedeutet, daß damit bestimmte Lösungsvorgänge an den eingesetzten Rohstoffen erfolgen sollen.

Besonders bevorzugte Dispersionsmedien sind Alkohole, wie Methyl-, Äthyl-, oder Isopropylalkohol sowie Aceton. Organische Säuren, sofern sie die vorstehenden Forderungen erfüllen, sind ebenfalls geeignet und auch Wasser kann als Bestandteil des Dispersionsmediums eingesetzt werden, wobei jedoch in Abhängigkeit vom Werkstoff, aus dem die feinteiligen Partikel ausgewählt sind, streng darauf zu achten ist, daß keine Oxidationsprozesse entstehen, wie es zum Beispiel für die gemäß dem Patentanspruch 2 vorgeschlagenen Carbide und Nitride der Fall sein kann. Sofern Wasser als Zumischungskomponente für das Dispersionsmedium verwendet wird, wird vorzugsweise zur Herabsetzung der Oberflächenspannung noch eine oberflächenaktive Substanz mit eingesetzt. Sofern eine Zugabe von temporären Bindemitteln notwendig ist, werden solche Bindemittel eingesetzt, die nicht zu einer Erhöhung der Viskosität führen. Vorzugsweise besteht die Zusammensetzung lediglich aus den feinteiligen Partikeln, dem zur Bildung der keramischen Matrix dienenden Keramikpulver, dem Dispersionsmedium und gegebenenfalls einer oberflächenaktiven Substanz.

Unter dem in Patentansprüchen und Beschreibung im Zusammenhang mit der vorliegenden Erfindung verwendeten Begriff: Partikel aus einem elektrisch leitenden Werkstoff sind auch Halbleiterwerkstoffe zu verstehen, wie zum Beispiel das in Patentanspruch 2 erwähnte Siliciumcarbid.

Das durch den Patentanspruch 7 gekennzeichnete Verfahren, beim dem die Verdampfung des Dispersionsmediums unter Einwirkung von Scherkräften erfolgt, ermöglicht auch bei einer Mischung aus Pulvern von großem Dichteunterschied den Erhalt des homogenen Verteilungszustandes der einzelnen Komponenten während der Entfernung des Dispersionsmediums.

Erfolgt die Entfernung des Dispersionsmediums durch Erhitzen des Dispergiergefäßes mittels eines erhitzten Wasserbades, können die notwendigen Scherkräfte durch Ultraschall erzeugt werden. Zweckmäßigerweise wird die trockene Mischung anschließend granuliert. Erfolgt dagegen die Entfernung des Dispersionsmediums durch Sprühtrocknung oberhalb der Siedetemperatur des Dispersionsmediums, können die notwendigen Scherkräfte durch einen schnellaufenden Rührer erzeugt werden.

Nach Entfernung des Dispersionsmediums werden Körper oder Schichten aus der Zuammensetzung gebildet, die vorzugsweise bei einer Temperatur von mehr als 1200 °C gesintert werden, wobei aber durch eine Temperatureinstellung, die unterhalb der Schmelztemperatur der feinteiligen Partikel liegt, sicherzustellen ist, daß die Partikel voneinander isoliert bleiben. Kommen Partikel mit relativ niedrigem Schmelzpunkt wie Gold oder Silber zum Einsatz, ist bei Matrixwerkstoffen, die höher liegende Sintertemperaturen verlangen, der Füllgrad an feinteiligen Partikeln so gering, vorzugsweise < 15 %, zu wählen, daß auch bei Erschmelzen der Partikel deren Zusammenschmelzen vermieden wird. Andererseits können bei feinteiligen Partikeln mit relativ niedrigem Schmelzpunkt auch Matrixwerkstoffe wie zum Beispiel Cordierit eingesetzt werden, die nur Sintertemperaturen von ca. 1000 °C benötigen.

Die nachfolgenden Beispiele dienen der weiteren Erklärung der Erfindung:

Beispiele 1 bis 3:

Unter Verwendung von Isopropanol als Dispersionsmedium werden in einer mit Aluminiumoxidkugeln von 8 mm bestückten Schwingmühle Mischungen aus Aluminiumoxid und Titancarbid mischgemahlen, wobei der Anteil des Titancarbids so berechnet ist, daß im fertiggesinterten Material 1; 5; und 17 Vol.% Titancarbid, Rest: Aluminiumoxid, vorliegen. Bereits vor Zugabe in die Schwingmühle lag die Teilchengröße des Titancarbids bei < 1 $\mu$m ($D_{50}$ ca. 0,5 $\mu$m); die spezifische Oberfläche des Aluminiumoxids lag bei 10 m²/g ($D_{50}$ = 1 $\mu$m).

Nach einer Mahldauer von 5 h wurde die fertige Mischung in ein Gefäß umgefüllt, das Gefäß in ein erhitzbares Wasserbad gesetzt und das Isopropanol durch Erhitzen des Wasserbades bei gleichzeitiger Einwirkung von Ultraschall entfernt. Nach Entfernung des Dispersionsmediums wurde die trockene Mischung unter Zugabe eines temporären Bindemittels granuliert und durch Formgebung mittels Axialpressen Körper gebildet.

Vergleichsbeispiel:

Entsprechend den vorstehend beschriebenen Bedingungen wurde das gleiche Aluminiumoxid, wie in den Beispielen 1 bis 3 beschrieben, jedoch ohne Zusatz von Titancarbid, zu Prüfkörpern verarbeitet.

In der nachfolgenden Tabelle sind die dielektrischen Eigenschaften, d.h. die effektive dielektrische Funktion $\varepsilon_{eff}$, der hergestellten Prüfkörper, gemessen mit einer Frequenz von 10 GHz bei Zimmertemperatur, festgehalten, wobei die übliche Schreibweise $\varepsilon_{eff} = \varepsilon_{1eff} + i\, \varepsilon_{2eff}$ gilt.

## Tabelle I:

| TiC-Anteil in Vol.% | Realteil $\varepsilon_{1eff}$ | | Imaginärteil $\varepsilon_{2eff}$ |
|---|---|---|---|
| – | 9,3 | | |
| 1 | 10,3 | | 0,5 i |
| 5 | 12 | + | 0,9 i |
| 17 | 50 | + | 13 i |

Beispiele 4 bis 6:

Unter Verwendung des gleichen Aluminiumoxids, wie zu Beispielen 1 bis 3 beschrieben, werden unter Verwendung von Isopropanol als Dispersionsmedium im Ultraschallbad während einer Rührzeit von 1 h drei Mischungen mit Platinteilchen einer $D_{50}$-Größe von 0,6 µm hergestellt, wobei die Anteile des Platins so berechnet sind, daß im fertig gesinterten Material 1,10 und 15 Vol.% Platin vorliegen. Nach Beendigung des Rührvorgangs wird bei einer Temperatur von ca. 60 °C getrocknet und anschließend bei einer Temperatur von 100 °C nachgetrocknet. Mit entionisiertem Wasser wird das getrocknete Pulver anschließend befeuchtet, so daß sein Feuchtigkeitsgehalt bei ca. 2 Gew.% liegt. Durch axiales Pressen bei einem Druck von 1500 bar werden Plättchen gepreßt und oxidativ bei 1635 °C gesintert. Die Dichte der erhaltenen Plättchen liegt bei mehr als 99 % der theoretischen Dichte. Durch Schleifen und Polieren werden die Plättchen auf ein Endmaß von 10,14 x 13 x 1,5 mm gebracht.

Die nachfolgende Tabelle zeigt die dielektrischen Eigenschaften der hergestellten Prüfkörper, wobei die Messungen, wie zu Beispielen 1 bis 4 beschrieben, durchgeführt wurden.

## Tabelle II:

| Platinanteil in Vol.% | Realteil $\varepsilon_{1eff}$ | | Imaginärteil $\varepsilon_{2eff}$ |
|---|---|---|---|
| 1 | 9,4 | + | 0,15 i |
| 10 | 13,4 | + | 1,0 i |
| 15 | 16,2 | + | 1,6 i |

Beispiel 7:

Unter Verwendung von Isopropanol als Dispersionsmedium wurden in einer mit $Al_2O_3$-Kugeln und $Al_2O_3$-Scheiben bestückten Rührwerkskugelmühle (Attritor) ein Aluminiumoxidpulver, wie in den vorhergehenden Beispielen beschrieben, und ein Goldpulver, das im Anlieferungszustand einen mittleren Teilchendurchmesser von 60 µm aufwies, während einer Mahldauer von 16 h behandelt. Nach Abschluß des Mahlvorganges wurde die Rührwerkskugelmühle geleert und mit Isopropanol ausgewaschen, ebenfalls wurden die Mahlkugeln mit Isopropanol abgespült. Die Spülflüssigkeit wurde der gebildeten Zusammensetzung zugegeben, wodurch diese auf einen Feststoffgehalt von 30 % verdünnt wurde. Unter ständiger Einwirkung von Ultraschall wurde bei

einer Temperatur von 65 °C das Isopropanol verdampft. Die entstandene Pulvermischung wurde durch axiales Heißpressen bei einer Temperatur von 1030 °C und einer Zeit von 30 min zu den in den vorgehenden Beispielen beschriebenen Prüfkörpern verdichtet. Im Mikrogefüge der hergestellten Sinterformkörper wiesen die aus Gold bestehenden Partikel einen mittleren Durchmesser von 0,6 μm auf und zeigten einen homogenen Verteilungszustand. Der Goldanteil im fertigen Prüfkörper betrug 2,7 Vol.%. Die Messung der dielektrischen Eigenschaften ergab:

$$\varepsilon_{1eff}\ 21,4\ +\ \varepsilon_{2eff}\ 7,7\ i.$$

## Patentansprüche

## Patentansprüche für fogende Vertragsstaaten : DE, FR, GB, IT

1. Ausgangszusammensetzung zur Herstellung eines dielektrische oder pyroelektrische Eigenschaften aufweisenden gesinterten Materials, bei dem in einer aus nichtleitender Keramik bestehenden Matrix feinteilige Partikel aus einem elektrisch leitenden Werkstoff, ohne miteinander in Kontakt zu stehen, eingeschlossen sind, dadurch gekennzeichnet, daß

   (A) feinteilige Partikel (a) mit einem 1 μm nicht überschreitenden Durchmesser und ein zur Bildung der keramischen Matrix vorgesehenes Pulver (b) in einem für die Partikel nicht oxidativ wirkenden Dispersionsmedium (c), das eine $35 \times 10^{-6}$ N/mm nicht überschreitende Oberflächenspannung und eine Dielektrizitätskonstante > 6 aufweist, dispergiert sind,
   (B) wobei die feinteiligen Partikel (a) aus:
      I: einer oder mehrerer der nachfolgend angegebenen Substanzen Platin, Gold, Silber, Palladium, Wolfram, Iridium, Rhodium, Molybdän, Nickel, Siliciumcarbid, Molybdänsilizid, Titanborid, Titancarbonitrid, Zirkoniumcarbonitrid, Hafniumcarbonitrid, den Carbiden, Nitriden, Carbonitriden und Boriden von Vanadium, Niob, Tantal, Chrom, Molybdän und Wolfram sowie Ruß bestehen, oder
      II: die feinteiligen Partikel (a) aus lediglich einer der nachfolgend angegebenen Substanzen Titancarbid, Titannitrid, Zirkoniumcarbid, Zirkoniumnitrid, Zirkoniumborid, Hafniumcarbid, Hafniumnitrid, Hafniumborid bestehen,
      Pulver (b) aus Aluminiumoxid, Zirkoniumdioxid, Berylliumoxid, Siliziumdioxid, Aluminiumtitanat, Magnesiumoxid, Siliziumnitrid, Aluminiumnitrid, Mullit, Steatit, Spinell, Cordierit oder einer Mischung dieser Substanzen besteht,

2. Ausgangszusammensetzung nach Anspruch 1, dadurch gekennzeichnet, daß das Keramikpulver eine spezifische Oberfläche von mehr als 4 m²/g aufweist.

3. Ausgangszusammensetzung nach einem der Ansprüche 1 und 2, dadurch gekennzeichnet, daß die Ausgangszusammensetzung eine Viskosität von nicht mehr als 500 mPas aufweist.

4. Verfahren zur Herstellung eines dielektrische oder pyroelektrische Eigenschaften aufweisenden Materials, bei dem in einer aus Keramik bestehenden Matrix feinteilige Partikel aus einem elektrisch leitenden Werkstoff, ohne miteinander in Kontakt zu stehen, eingeschlossen sind, unter Verwendung einer Ausgangszusammensetzung nach einem der Ansprüche 1 bis 4, dadurch gekennzeichnet, daß das Dispersionsmedium unter Einwirkung von Scherkräften durch Verdampfen bei erhöhter Temperatur entfernt wird und daß aus der vom Dispersionsmedium befreiten Ausgangszusammensetzung ein Körper geformt oder eine auf einem Substrat angeordnete Schicht gebildet und unterhalb der Schmelztemperatur der feinteiligen Partikel gesintert wird.

5. Verfahren nach Anspruch 5, dadurch gekennzeichnet, daß als auf das Dispersionsmedium einwirkende Scherkräfte Ultraschallwellen dienen.

6. Verfahren nach Anspruch 5, dadurch gekennzeichnet, daß die Verdampfung des Dispersionsmediums durch Sprühtrocknung oberhalb der Siedetemperatur des Dispersionsmediums erfolgt, während die Ausgangszusammensetzung schnell gerührt wird.

7. Verfahren nach einem der Ansprüche 5 bis 7, dadurch gekennzeichnet, daß unter Schutzgas gesintert wird.

EP 0 524 925 B1

**Patentansprüche für fogende Vertragsstaaten : BE, NL**

1. Ausgangszusammensetzung zur Herstellung eines dielektrische oder pyroelektrische Eigenschaften aufweisenden gesinterten Materials, bei dem in einer aus nichtleitender Keramik bestehenden Matrix feinteilige Partikel aus einem elektrisch leitenden Werkstoff, ohne miteinander in Kontakt zu stehen, eingeschlossen sind, dadurch gekennzeichnet, daß

   (A) feinteilige Partikel (a) mit einem 1 μm nicht überschreitenden Durchmesser und ein zur Bildung der keramischen Matrix vorgesehenes Pulver (b) in einem für die Partikel nicht oxidativ wirkenden Dispersionsmedium (c), das eine 35 x 10$^{-6}$ N/mm nicht überschreitende Oberflächenspannung und eine Dielektrizitätskonstante > 6 aufweist, dispergiert sind,

   (B) wobei die feinteiligen Partikel (a) aus Platin, Gold, Silber, Palladium, Wolfram, Iridium, Rhodium, Molybdän, Nickel, Siliciumcarbid, Molybdänsilizid, den Carbiden, Nitriden, Carbonitriden und Boriden von Titan, Zirkonium, Hafnium, Vanadium, Niob, Tantal, Chrom, Molybdän und Wolfram sowie Ruß bestehen, Pulver (b) aus Aluminiumoxid, Zirkoniumdioxid, Berylliumoxid, Siliziumdioxid, Aluminiumtitant, Magnesiumoxid, Siliziumnitrid, Aluminiumnitrid, Mullit, Steatit, Spinell, Cordierit oder einer Mischung dieser Substanzen besteht,

2. Ausgangszusammensetzung nach Anspruch 1, dadurch gekennzeichnet, daß das Keramikpulver eine spezifische Oberfläche von mehr als 4 m²/g aufweist.

3. Ausgangszusammensetzung nach einem der Ansprüche 1 und 2, dadurch gekennzeichnet, daß die Ausgangszusammensetzung eine Viskosität von nicht mehr als 500 mPas aufweist.

4. Verfahren zur Herstellung eines dielektrische oder pyroelektrische Eigenschaften aufweisenden Materials, bei dem in einer aus Keramik bestehenden Matrix feinteilige Partikel aus einem elektrisch leitenden Werkstoff, ohne miteinander in Kontakt zu stehen, eingeschlossen sind, unter Verwendung einer Ausgangszusammensetzung nach einem der Ansprüche 1 bis 4, dadurch gekennzeichnet, daß das Dispersionsmedium unter Einwirkung von Scherkräften durch Verdampfen bei erhöhter Temperatur entfernt wird und daß aus der vom Dispersionsmedium befreiten Ausgangszusammensetzung ein Körper geformt oder eine auf einem Substrat angeordnete Schicht gebildet und unterhalb der Schmelztemperatur der feinteiligen Partikel gesintert wird.

5. Verfahren nach Anspruch 5, dadurch gekennzeichnet, daß als auf das Dispersionsmedium einwirkende Scherkräfte Ultraschallwellen dienen.

6. Verfahren nach Ansprüch 5, dadurch gekennzeichnet, daß die Verdampfung des Dispersionsmediums durch Sprühtrocknung oberhalb der Siedetemperatur des Dispersionsmediums erfolgt, während die Ausgangszusammensetzung schnell gerührt wird.

7. Verfahren nach einem der Ansprüche 5 bis 7, dadurch gekennzeichnet, daß unter Schutzgas gesintert wird.

**Claims**

**Claims for the following Contracting States : DE, FR, GB, IT**

1. Starting composition for the production of a sintered material having dielectric or pyroelectric properties, in which finely divided particles formed of an electrically conductive material are included in a . matrix consisting of non-conducting ceramic, without being in contact with one another, **characterised in that**

   A) finely divided particles (a) with a diameter not exceeding 1 μm and a powder (b) for the formation of the ceramic matrix are dispersed in a non-oxidatively acting dispersion medium (c) for the particles which has a surface tension not exceeding 35 x 10$^{-6}$ N/mm and a dielectric constant > 6,

   B) wherein the finely divided particles (a) consist of:

   I: one or several of the following indicated substances: platinum, gold, silver, palladium, tungsten, iridium, rhodium, molybdenum, nickel, silicon carbide, molybdenum silicide, titanium boride, titanium carbonitride, zirconium carbonitride, hafnium carbonitride, the carbides, nitrides, carbonitrides and borides of vanadium, niobium, tantalum, chromium, molybdenum and tungsten as well as carbon black, or

II: the finely divided particles (a) consist of merely one of the following indicated substances: titanium carbide, titanium nitride, zirconium carbide, zirconium nitride, zirconium boride, hafnium carbide, hafnium nitride, hafnium boride,

powder (b) consists of aluminium oxide, zirconium dioxide, beryllium oxide, silicon dioxide, aluminium titanate, magnesium oxide, silicon nitride, aluminium nitride, mullite, steatite, spinel, cordierite or a mixture of these substances.

2. Starting composition according to claim 1, **characterised in that** the ceramic powder has a specific surface of more than 4 $m^2$/g.

3. Starting composition according to one of claims 1 and 2, **characterised in that** the starting composition has a viscosity of not more than 500 mPas.

4. Process for the production of a material having dielectric or pyroelectric properties, in which finely divided particles formed of an electrically conductive substance are incorporated in a matrix consisting of ceramic, without being in contact with one another, with use of a starting composition according to one of claims 1 to 4, **characterised in that** the dispersion medium is removed at elevated temperature by vaporisation under the effect of shear forces and that a body is shaped from starting composition freed from the dispersion medium or a layer disposed on a substrate is formed from the starting composition freed from the dispersion medium and the body or layer is sintered below the melting temperature of the finely divided particles.

5. Process according to claim 5, **characterised in that** ultrasonic waves serve as the shear forces acting on the dispersion medium.

6. Process according to claim 5, **characterised in that** the vaporisation of the dispersion medium takes place by spray drying above the boiling temperature of the dispersion medium while the starting composition is stirred rapidly.

7. Process according to one of claims 5 to 7, **characterised in that** there is sintering under a protective gas.

**Claims for the following Contracting States : BE, NL**

1. Starting composition for the production of a sintered material having dielectric or pyroelectric properties, in which finely divided particles formed of an electrically conductive material are included in a matrix consisting of non-conducting ceramic, without being in contact with one another, **characterised in that**

A) finely divided particles (a) with a diameter not exceeding 1 $\mu$m and a powder (b) for the formation of the ceramic matrix are dispersed in a non-oxidatively acting dispersion medium (c) for the particles which has a surface tension not exceeding 35 x $10^{-6}$ N/mm and a dielectric constant > 6,

B) wherein the finely divided particles (a) consist of:

platinum, gold, silver, palladium, tungsten, iridium, rhodium, molybdenum, nickel, silicon carbide, molybdenum silicide, carbides, nitrides, carbonitrides and borides of titanim, zirconium, hafnium, vanadium, niobium, tantalum, chromium, molybdenum and tungsten as well as carbon black, the or powder (b) consists of aluminium oxide, zirconium dioxide, beryllium oxide, silicon dioxide, aluminium titanate, magnesium oxide, silicon nitride, aluminium nitride, mullite, steatite, spinel, cordierite or a mixture of these substances.

2. Starting composition according to claim 1, **characterised in that** the ceramic powder has a specific surface of more than 4 $m^2$/g.

3. Starting composition according to one of claims 1 and 2, **characterised in that** the starting composition has a viscosity of not more than 500 mPas.

4. Process for the production of a material having dielectric or pyroelectric properties, in which finely divided particles formed of an electrically conductive substance are incorporated in a matrix consisting of ceramic, without being in contact with one another, with use of a starting composition according to one of claims 1 to 4,**characterised in that** the dispersion medium is removed at elevated temperature by vaporisation under the effect of shear forces and that a body is shaped from starting composition freed from the dispersion medium or a layer disposed on a substrate is formed from the starting composition freed from the dispersion medium and the body or layer is sintered below the melting temperature of the finely divided particles.

5. Process according to claim 5, **characterised in that** ultrasonic waves serve as the shear forces acting on the dispersion medium.

6. Process according to claim 5, **characterised in that** the vaporisation of the dispersion medium takes place by spray drying above the boiling temperature of the dispersion medium while the starting composition is stirred rapidly.

7. Process according to one of claims 5 to 7, **characterised in that** there is sintering under a protective gas.

## Revendications

## Revendications pour les Etats contractants suivants : DE, FR, GB, IT

1. Composition de départ pour la préparation d'un matériau fritté possédant des propriétés diélectriques ou pyroélectriques, dans lequel de fines particules d'une matière électroconductrice sont enfermées dans une matrice constituée d'une céramique non-conductrice, sans être en contact les unes avec les autres, **caractérisée** en ce que

A) les fines particules (a), dont le diamètre ne dépasse pas 1 μm, et une poudre (b) destinée à la formation de la matrice de céramique sont dispersées dans un milieu dispersant (c) qui n'a pas d'action oxydante sur les particules et dont la tension superficielle ne dépasse pas $35.10^{-6}$ N/mm et la constante diélectrique est supérieure à 6, et

B) les fines particules (a) sont constituées

1) d'une ou de plusieurs des substances suivantes : platine, or, argent, palladium, tungstène, iridium, rhodium, molybdène, nickel, carbure de silicium, siliciure de molybdène, borure de titane, carbonitrure de titane, carbonitrure de zirconium, carbonitrure de hafnium, carbures, nitrures, carbonitrures et borures de vanadium, niobium, tantale, chrome, molybdène et tungstène, et noir de fumée, ou bien

2) d'une seule des substances suivantes : carbure de titane, nitrure de titane, carbure de zirconium, nitrure de zirconium, borure de zirconium, carbure de hafnium, nitrure de hafnium, borure de hafnium, et la poudre (b) est constituée d'oxyde d'aluminium, de dioxyde de zirconium, d'oxyde de béryllium, de dioxyde de silicium, de titanate d'aluminium, d'oxyde magnésium, de nitrure de silicium, de nitrure d'aluminium, de mullite, de stéatite, de spinelle, de cordiérite, ou d'un mélange de ces substances.

2. Composition de départ conforme à la revendication 1, caractérisée en ce que la poudre de céramique présente une aire spécifique valant plus de 4 m²/g.

3. Composition de départ conforme à l'une des revendications 1 et 2, caractérisée en ce qu'elle présente une viscosité ne dépassant pas 500 mPa.s.

4. Procédé de préparation d'un matériau possédant des propriétés diélectriques ou pyroélectriques, dans lequel de fines particules d'une matière électroconductrice sont enfermées dans une matrice constituée d'une céramique, sans être en contact les unes avec les autres, dans lequel on utilise une composition de départ conforme à l'une des revendications 1 à 4, **caractérisé** en ce que l'on élimine le milieu dispersant par évaporation à température élevée, sous l'action de forces de cisaillement, et en ce que, à partir de la composition de départ débarrassée du milieu dispersant, on façonne une pièce ou on forme une couche disposée sur un substrat, et on fritte cette pièce ou cette couche, à une température inférieure au point de fusion des fines particules.

5. Procédé conforme à la revendication 4, caractérisé en ce que l'on se sert d'ondes ultrasonores pour exercer des forces de cisaillement sur le milieu dispersant.

6. Procédé conforme à la revendication 4, caractérisé en ce que l'on réalise l'évaporation du milieu dispersant par séchage par pulvérisation à une température supérieure au point d'ébullition du milieu dispersant, tout en agitant énergiquement la composition de départ.

7. Procédé conforme à l'une des revendications 4 à 6, caractérisé en ce que l'on effectue le frittage sous une atmosphère de protection.

**Revendications pour les Etats contractants suivants : BE, NL**

1. Composition de départ pour la préparation d'un matériau fritté possédant des propriétés diélectriques ou pyroélectriques, dans lequel de fines particules d'une matière électroconductrice sont enfermées dans une matrice constituée d'une céramique non-conductrice, sans être en contact les unes avec les autres, **caractérisée** en ce que
   A) les fines particules (a), dont le diamètre ne dépasse pas 1 μm, et une poudre (b) destinée à la formation de la matrice de céramique sont dispersées dans un milieu dispersant (c) qui n'a pas d'action oxydante sur les particules et dont la tension superficielle ne dépasse pas $35.10^{-6}$ N/mm et la constante diélectrique est supérieure à 6, et
   B) les fines particules (a) sont constituées
      1) d'une ou de plusieurs des substances suivantes : platine, or, argent, palladium, tungstène, iridium, rhodium, molybdène, nickel, carbure de silicium, siliciure de molybdène, carbures, nitrures, carbonitrures et borures de titane, zirconium, hafnium, vanadium, niobium, tantale, chrome, molybdène et tungstène, et noir de fumée,
      et la poudre (b) est constituée d'oxyde d'aluminium, de dioxyde de zirconium, d'oxyde de béryllium, de dioxyde de silicium, de titanate d'aluminium, d'oxyde magnésium, de nitrure de silicium, de nitrure d'aluminium, de mullite, de stéatite, de spinelle, de cordiérite, ou d'un mélange de ces substances.

2. Composition de départ conforme à la revendication 1, caractérisée en ce que la poudre de céramique présente une aire spécifique valant plus de 4 m²/g.

3. Composition de départ conforme à l'une des revendications 1 et 2, caractérisée en ce qu'elle présente une viscosité ne dépassant pas 500 mPa.s.

4. Procédé de préparation d'un matériau possédant des propriétés diélectriques ou pyroélectriques, dans lequel de fines particules d'une matière électroconductrice sont enfermées dans une matrice constituée d'une céramique, sans être en contact les unes avec les autres, dans lequel on utilise une composition de départ conforme à l'une des revendications 1 à 4, **caractérisé** en ce que l'on élimine le milieu dispersant par évaporation à température élevée, sous l'action de forces de cisaillement, et en ce que, à partir de la composition de départ débarrassée du milieu dispersant, on façonne une pièce ou on forme une couche disposée sur un substrat, et on fritte cette pièce ou cette couche, à une température inférieure au point de fusion des fines particules.

5. Procédé conforme à la revendication 4, caractérisé en ce que l'on se sert d'ondes ultrasonores pour exercer des forces de cisaillement sur le milieu dispersant.

6. Procédé conforme à la revendication 4, caractérisé en ce que l'on réalise l'évaporation du milieu dispersant par séchage par pulvérisation à une température supérieure au point d'ébullition du milieu dispersant, tout en agitant énergiquement la composition de départ.

7. Procédé conforme à l'une des revendications 4 à 6, caractérisé en ce que l'on effectue le frittage sous une atmosphère de protection.